Europäisches Patentamt

European Patent Office

Office européen des brevets

(11) Publication number: **0 038 149 B1**

## EUROPEAN PATENT SPECIFICATION

(45) Date of publication of patent specification: **20.07.88**

(51) Int. Cl.⁴: **H 01 G 9/05**

(21) Application number: **81301450.3**

(22) Date of filing: **02.04.81**

(54) **Improvements in porous bodies for solid electrolytic capacitors and processes for producing the same.**

(30) Priority: **02.04.80 JP 43325/80**

(43) Date of publication of application:
**21.10.81 Bulletin 81/42**

(45) Publication of the grant of the patent:
**20.07.88 Bulletin 88/29**

(84) Designated Contracting States:
**DE FR GB IT**

(56) References cited:
**FR-A-1 360 530**
**GB-A- 678 865**
**GB-A- 949 634**
**US-A-3 599 053**

(73) Proprietor: **NEC CORPORATION**
**33-1, Shiba 5-chome, Minato-ku**
**Tokyo 108 (JP)**

(72) Inventor: **Shimizu, Shigeaki**
**Nippon Electric Co. Ltd. 33-1 Shiba Gochome**
**Minato-ku Tokyo (JP)**
Inventor: **Kubo, Yoshimi**
**Nippon Electric Co. Ltd. 33-1 Shiba Gochome**
**Minato-ku Tokyo (JP)**
Inventor: **Suzuki, Tetsuo**
**Nippon Electric Co. Ltd 33-1 Shiba Gochome**
**Minato-ku Tokyo (JP)**
Inventor: **Kizaki, Takashi**
**Nippon Electric Co. Ltd 33-1 Shiba Gochome**
**Minato-ku Tokyo (JP)**
Inventor: **Igarashi, Hitoshi**
**Nippon Electric Co. Ltd 33-1 Shiba Gochome**
**Minato-ku Tokyo (JP)**

(74) Representative: **Pritchard, Colin Hubert et al**
**Mathys & Squire 10 Fleet Street**
**London EC4Y 1AY (GB)**

Courier Press, Leamington Spa, England.

## Description

The present invention relates to porous bodies for solid electrolyte capacitors, and a process for producing such bodies.

At present, tantalum has been widely used as an electrode metal for solid electrolyte capacitors. However, in spite of their excellent properties, there is no great promise of a bright future for Ta solid electrolyte capacitors. In recent years, a large amount of tantalum has been consumed as material for a capacitor. As a result, tantalum-containing ores, which are in themselves rare, have been increasingly exhausted. The exhaustion of tantalum resources results in a substantial increase in the cost of tantalum, which in turn will lead to the loss of marketability of the tantalum capacitor in the near future because of its inevitably increasing cost. Accordingly, there is a strong desire for a solid electrolyte capacitor made of a material which can be substituted for tantalum. As an anode material for a solid electrolyte capacitor, such material should meet the following requirements:

(1) The material cost is cheap;

(2) It can be formed into a porous body having a high surface area;

(3) The capacitance per unit area ($\mu FV/cm^2$ is high; and

(4) Properties, other than capacitance, such as dielectric loss and leakage current, are equivalent to or better than those of the Ta solid electrolyte capacitor.

As one of the anode materials for a solid electrolyte capacitor which can substantially satisfy the above-mentioned requirements, U.S. Patent No. 3.599.053 proposes an Al—Ti alloy porous body which is made by sintering a compacted Al—Ti alloy powder. The Al—Ti alloy is made by vacuum melting or arc melting a mixture of aluminium and titanium. The alloy is then crushed into fine particles and further processed. However, the vacuum melting or arc melting process has the disadvantages that the production process is complicated, and the resultant porous body has a low specific surface area which makes it difficult to produce a capacitor having excellent properties.

On the other hand, the inventors of the present invention have proposed a process for producing a Ti—Al porous body in U.S. Patent No. 4.331.447 issued on May 25, 1982. This process comprises molding under pressure a mixture of finely divided titanium and aluminium powder and subjecting the molded mass to a suitable heat treatment. In accordance with this process, a porous body of Al—Ti alloy having a density of from 20 to 70% of the theoretical density and a specific surface area of from 0.01 to 1.0 $m^2/g$ can be easily obtained. In this process, a porous body of Al—Ti alloy having a high specific surface area can be made directly from Ti powder and Al powder, and therefore, the production process is simple. The wet properties of the porous body indicate that an excellent high capacitance capacitor exhibiting a low leakage current and dielectric loss can be made therefrom.

However, the Ti—Al porous body and the process for making that body according to U.S. Patent No. 4.331.477 suffer from the following disadvantages. In order to obtain a porous body having a high specific surface area and suitable for replacing a porous body made of tantalum, it is necessary to use a homogeneous Ti—Al alloy in the form of a super-fine powder having a diameter of about several microns. Although such homogeneous Ti—Al alloy fine powder can provide a porous body having the desired specific surface area, it is naturally excessively oxidized. Therefore, the resultant porous body is remarkably inferior in respect of leakage current and dielectric loss when formed into a solid electrolytic capacitor. Therefore, such a porous body is useless as an anode material for a solid electrolytic capacitor.

On the other hand, in the formation of a cathode consisting of a manganese dioxide layer, a porous Ti—Al alloy body obtained merely by greatly decreasing the particle size while maintaining the conventional structure thereof presents another problem. That is, the formation of a manganese dioxide cathode layer by decomposition of manganese nitrate on a porous anode body having too fine a structure is liable to be difficult and complicated.

No other process which is satisfactory for forming a solid cathode and which is comparable with the use of manganese nitrate is yet known. Accordingly, the Ti—Al alloy porous anode body is also required to have a high resistance to the thermal decomposition treatment of manganese nitrate. Usually, cathode formation is conducted through a plurality (normally, 5 to 10) of thermal decompositions of manganese nitrate. In the case of a Ta solid electrolytic capacitor, it is well known that the leakage current and dielectric loss after solidification can be greatly varied by changing the thermal decomposition conditions such as the rate of increase in temperature, atmosphere and the like. Usually, the optimum conditions for these properties have been selected. However, even in the light of these experiences, it is apparent that the leakage current tends to increase as the number of decompositions is increased. In a Ta solid electrolytic capacitor, the porous body is generally subjected to a re-formation treatment to repair the damaged portion thereof. Also, when the porous body has a conventional structure composed of finely divided particles in the form of a sphere, if the size of the particles is micronized, the void structure in the porous body becomes necessaruly fine, which prevents a solution of manganese nitrate from penetrating into the interior of the porous body. When such an impregnated porous body is subjected to heat treatment for the thermal decomposition of the manganese nitrate, the absolute amount of manganese dioxide deposited within the porous body is insufficient, which results in an increase in series resistance as a cathode.

As a result of examinations made by the inventors of the present invention, it was found that a formation film obtained by subjecting a homogeneous Ti—Al alloy to a formation treatment is much more remarkably deteriorated on thermal decomposition of manganese nitrate than in the case of a Ta porous body. It is considered that this is due to the fact that both Ti and Al essentially are far more chemically active than Ta. A reduction in the number of manganese nitrate decompositions is most effective for preventing deterioration, i.e. an increase in the leakage current, occurring during the decomposition procedure. In order to avoid the above-mentioned disadvantages, to reduce the series resistance of the cathode, and the dielectric loss and to realize satisfactory capacitor properties, the inventors have appreciated that the voids within the porous body should be large-sized and the specific surface area of the porous body should also be large. The large-sized voids enable a satisfactory cathode formation, even if the number of thermal decompositon of manganese nitrate is reduced. In contrast, with small-sized voids, the cathode should be gradually formed to a desired thickness while preventing liquid passageways provided by the voids from being clogged at the initial stage of the decomposition by a well know manner comprising repeating the decompositions using a methanol-diluted solution of manganese nitrate. Accordingly, the number of decompositions is inevitably increased.

When a Ti—Al alloy capacitor having a capacitance (capacitance/volume) comparable with that of the Ta capacitor is to be produced, merely by micronizing the structure of a porous body of Ti—Al alloy while maintaining the conventional configuration of structure, as already described above, the preparation of the porous body is difficult and complicated and the electric properties of the resultant porous body provided with a manganese dioxide cathode are inferior. Accordingly, it is difficult to replace Ta with a Ti—Al alloy which is an inexpensive material for industrial purpose.

As described above, the porous body according to U.S. Patent No. 4.331.477 has the disadvantage that in spite of its high specific surface area, the unique characteristic could not be effectively utilized in the production of a solid electrolyte capacitor where the specific surface area is too high.

An object of the present invention is to provide a porous body for a solid electrolytic capacitor which is capable of substituting for tantalum porous body and exhibit a high capacitance in spite of the small size thereof and is inexpensive.

Another object of the present invention is to provide a porous body of Ti—Al alloy with a novel structure for a solid electrolytic capacitor having improved values of leakage current and dielectric loss. A still another object of the present invention is to provide a process for producing a porous body having a high specifc surface area and large-sized voids for a solid electrolytic capacitor.

According to the invention a porous body for a solid electrolytic capacitor comprising a number of Ti—Al alloy particles partially contacted with each other so as to form an integral body, the surface of the respective Ti—Al alloy particles having a fine ruggedness, and the Al content of the Ti—Al alloy being in the range of 50 to 70 atomic %, characterised in that the porous body has large-sized voids enabling satisfactory cathode formation and the size of said fine ruggedness ranges from 0.5 to 5 µm.

According to the invention there is also provided a process for producing a porous body for a solid electrolytic capacitor comprising the steps of:

mixing titanium powder having an average particle size of 10 to 30 µm with aluminum power having an average particle size in the range of 1/6 to 1/2 of that of said titanium powder;

molding the mixture under compression to form a shaped product; and

heat treating the shaped product in vacuo or in an inert gas, thereby to diffuse the aluminum into the titanium.

A porous body of Ti—Al alloy according to the present invention is characterised by having a double rugged structure. That is, the porous body is of such a structure that the particles in the form of a sphere partially contact with each other so as to form an integral body and the surface of the respective spherical particles has fine ruggedness formed thereon. If the size of the fine ruggedness is of the order of several microns or less, even where the diameter of the spherical particles is high, the specific surface area per unit volume is satisfactorily high. Also, because the diameter of the spherical particle is much higher than the size of the ruggedness, the porous body has rough voids therein which provide a wide passageway through which a manganese nitrate solution penetrates. The wide passageway is effective for decreasing the number of times of the thermal decomposition of the managanese nitrate, thereby reducing the series resistance of the resultant cathode. In addition, the novel structure of the porous body as mentioned makes it possible to avoid the difficulties in the production technique which are encountered when a solid electrolytic capacitor having a high capacitance is to be produced from a finely divided Ti—Al alloy by using the prior art.

It is desirable that the size of the ruggedness on the respective particles is in a range of from 0.5 to 5 µm. If the ruggedness size is less than 0.5 µm, the ruggedness is rendered flat by an oxide film formed thereon through anodic oxidation. Accordingly, an increase in the capacitance of the resultant capacitor can not be expected. If the ruggedness size is more than 5 µm, the resultant anode body can not exhibit a high capacitance comparable with that of that Ta anode body. Preferably, in the production of the porous body having the above mentioned fine ruggedness, Ti powder having an average particle size of from 10 to 30µm is used. If the particle size is less than 10

μm, the titanium particles are excessively oxidized. The excessive oxidation causes the porous body to lose the fine rugged structure, which results in a deterioration in the electrical properties of the resultant capacitor. On the other hand, if the particle size of the titanium powder is more than 30 μm, the resultant anode body can not exhibit a high capacitance comparable with that of the Ta anode body.

Also, Al powder having an average particle size of from 1/6 to 1/2 of that of the Ti powder is used. This particle size range of the Al powder causes large-sized voids to be formed throughout the porous body, forming a uniform fine ruggedness on the surface of the body and ensuring a uniform composition of the surface of the body. In the case where the ratio of an average particle size of the Al powder to an average particle size of the Ti powder is higher than 1/2, the desired double rugged structure cannot be obtained and the surface composition of the resultant porous body becomes non-uniform. On the other hand, when the ratio is lower than 1/6, the size of the resultant ruggedness becomes small and uniform, whereby the resultant capacitor cannot exhibit a high capacitance. With regard to the composition of a mixture of Al powder and Ti powder, it is desirable that the Al powder is in a range of from 50 to 70 atomic %. this Al atomic % range is effective for obtaining a high electrostatic capacity per unit volume and most excellent solid capacitor properties. In the Ti—Al alloy porous body manufactured by a process according to the invention, the composition at the surface portion of the respective spherical particles contacted with each other is Al-rich as compared with the average ratio of the Al—Ti alloy composition.

The Ti—Al alloy porous body is produced by mixing Ti powder having a particle size within the above mentioned range with Al powder having a particle size within the above mentioned range, molding the mixture under pressure and heat-treating the molded mass. The pressure molding can be effected in a well known conventional manner. In order to form stably the double rugged structure, it is necessary that the heat treatment is carried out at a temperature of from 500°C to a temperature less than the melting point of Al for a period between 5 minutes and 60 minutes. The heat treatment at a temperature less than 500°C is ineffective because diffusion of aluminum into titanium is not effected to a significant degree. The diffusion of aluminum into titanium reaches an almost significant level at a temperature of 500°C or more. For example, when the heat treatment is carried out at a temperature of 500°C for about 5 minutes, the alloying of aluminum with titanium proceeds to a significant degree due to a so-called Kirkendall effect. Accordingly, the heat treatment temperature of 500°C is satisfactorily effective for industrial purpose. On the other hand, if the alloying of Al with Ti is to be carried out by abruptly heating to a high temperature more than the melting point of Al, the fusion of the Al precedes, which results in an abnormal expansion of the resultant porous body. Alternatively, as is usual with a liquid phase sintering, the product, while being porous, exhibit a low specific surface area. That is, a porous body whose voids are not connected to the outer surface thereof is obtained. Therefore, such high temperature heat treatment produces a porous body unsuitable as an anode for a solid electrolytic capacitor. The melting point of aluminum as used in this specification is somewhat different from the melting point, i.e. 660°C, of aluminum as a simple element. When particles of titanium and aluminum are heated in contact with each other, interdiffusion takes place therebetween. As a result, the melting temperature, i.e. the melting point, of the aluminum diffused into the titanium having a higher melting point becomes higher than the melting point of pure aluminum. That is, the melting point of this diffused aluminum is about 665°C. This aluminum melting point is referred to as effective melting point, hereinafter. In the case where the heat treatment temperature is higher than the effective melting point, the same problems as in the case of the above mentioned liquid phase sintering arise. As the process for producing a porous body for a solid electrolytic capacitor, a process by which a porous body having a constant and high specific surface area can be stably produced is desirable. In addition, the porous body should exhibit a high mechanical strength when formed into a solid electrolytic capacitor. For this purpose, after the mixture of aluminum and titanium has been heated at a temperature of from 500°C up to a temperature less than the effective melting point of aluminum, so as to form a porous body, the resultant porous body should be re-heated at a temperature of 1100°C or less for from 5 to 180 minutes. Although this two-step heat treatment seems to be similar to the above mentioned liquid phase sintering at a glance, the former is, in fact, quite different from the latter. That is, in the two-step heat treatment, the Ti—Al reaction is substantially completed in the first heat treatment step. When the porous body so obtained is subjected to the second heat treatment, at a temperature higher than the effective melting point of aluminum, the mechanical strength of the porous body can be increased without causing the phenomena as in the case of the liquid phase sintering. If the re-heat treatment is carried out at a temperature higher than 1100°C, the aluminum is excessively diffused into the titanium, which causes the fine ruggedness to be flat, whereby the double rugged structure is lost. For this reason, the reheat treatment temperature should be limited to 1100°C or less.

The invention will now be described, by way of example, with reference to the accompanying drawings, in which:

Fig. 1 (a) is a schematic cross sectional view of the structure of a conventional porous body in which D indicated a particle size;

Fig. 1 (b) is a schematic cross sectional view of the structure of a porous body according to the present invention in which D' indicates a particle size of a primary particle;

Fig. 2 is a schematic cross sectional view of a porous body at three stages, (a), (b) and (c), during its production by a process in accordance with the present invention;

Fig. 3 is a secondary electron view under a scanning type electron microscope of the interior of a porous body according to the present invention at a magnification of 1800;

Fig. 4 is a secondary electron view under a scanning type electron microscope of the interior of a porous body containing 22 atomic % of Al outside the scope of the present invention at a magnification of 1800;

Fig. 5 is a graph indicating the relationship between the specific surface area of a porous body, the composition of the body and the average particle size of titanium,

Fig. 6 (a) is secondary electron view under a scanning type electron microscope of the cut area of particles constituting a porous body according to the present invention at a magnification of 1800;

Fig. 6 (b) is a Ti characteristic X-ray plane analytical view indicating a Ti distribution in the same cut area;

Fig. 6 (c) is an Al characteristic X-ray plane analytical view indicating an Al distribution in the same cut area;

Fig. 7 is a graph indicating an example of the formation wet properties of a porous body according to the present invention in which (a), (b) and (c) represent the dielectric loss property, the electrostatic capacitance property and the leakage current property, respectively, and;

Fig. 8 is a graph indicating an example of the properties of a solidified porous body according to the present invention in which (a), (b) and (c) represent the dielectric loss property, the electrostatic capacitance and the leakage current property, repectively.

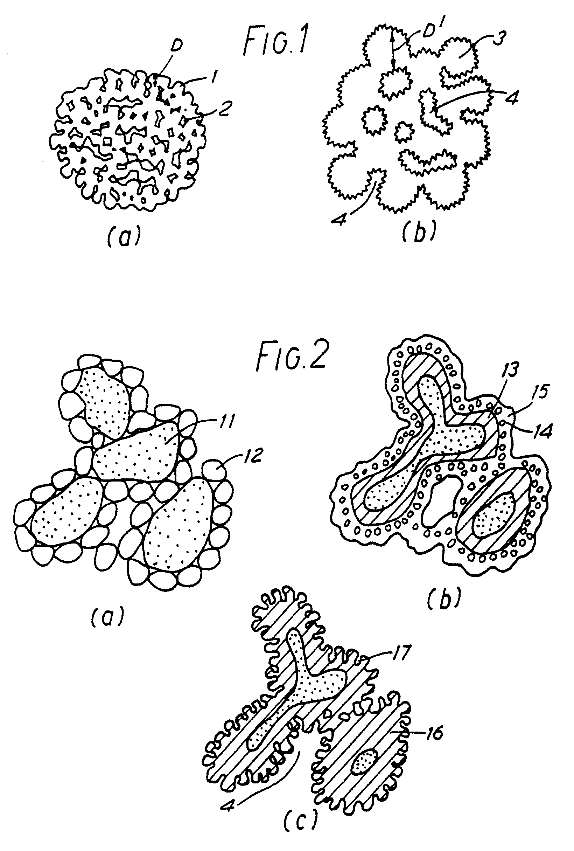

The difference in structure between a porous body according to the present invention and a conventional porous body is shown in Fig. 1. Fig. 1 shows an optional cross section of the porous body. Fig. 1 (a) is a cross sectional view of the conventional porous body. Referring to Fig. 1 (a), it is clear that the conventional porous body consists of finely divided particles 1 in the form of a sphere and voids 2 therebetween. Fig. 1 (b) is a cross sectional view of an example of a porous body according to the present invention. Referring to Fig. 1 (b), it is apparent that the porous body has fine ruggednesses on the surface thereof. As compared with Fig. 1 (a), the porous body according to the present invention consists of larger particles 3 and larger voids 4 therebetween. In addition, the porous body of the present invention has fine ruggednesses formed on the surface of the respective particles 3.

As is apparent from Fig. 1, the porous body of the present invention has larger voids 4 than the conventional porous body, notwithstanding that the specific surface area of the present porous body is almost equal to that of the conventional porous body. In addition, the average diameter D' of the particles 3 constituting the porous body of the present invention is larger than the average diameter D of the particles 1 constituting the conventional porous body. The porous body of the present invention which is composed of large particle having fine ruggednesses on the surface thereof has the following advantages.

(a) The use of a super-fine powder of Ti—Al alloy unsuitable as the capacitor material is avoided in the production process. The capacitance per volume value reaches a satisfactory level which is equal to that of the Ta porous body.

(b) The liquid passageway through which a manganese nitrate solution is penetrated is wide, which makes it possible to reduce the number of times of the thermal decomposition of manganese nitrate and to prevent a formation film of the Ti—Al alloy from being deteriorated.

(c) For the same reason as described in (b), the dielectric loss due to the series resistance of the cathode can be reduced.

(d) Generally, the voltage drop within the porous body during the formation procedure becomes small, which makes it possible to effect the formation and re-formation of both the surface and the interior of the body in a short period of time. Also, the washing and drying procedures can be rapidly carried out. Similarly, even when the porous body is subjected to an etching treatment so as to reduce the leakage current, the reaction products due to the etching procedure can be more readily washed away than in the case of the conventional porous body.

The porous body having a double ruggedness on the surface thereof according to the present invention may be produced by the following possible processes.

(1) A porous body is produced in a conventional manner and, thereafter, the porous body is subjected to any suitable etching treatment so as to form fine ruggedness on the surface thereof.

(2) the Kirkendall effect is utilized

The porous body having the above mentioned unique configuration may be formed by various processes as mentioned above and these processes respectively have merits and demerits. The process (2) utilizing the Kirkendall effect is favourable, as it is capable of being easily practiced on an industrial scale and of producing stably the desired porous body at a low cost.

A combination of titanium and aluminum is a combination to two elements the melting points of which are largely different from each other. It is known that when these elements are heat-treated in contact with each other, the aluminum atoms diffuse into the lattice of the titanium at an overwhelming speed thereby to form a reaction layer of Ti—Al. In the case of the Ti—Al system, the Kirkendall effect occurs through the medium of vacant lattice points, so that the aluminum atom diffused into the titanium. In the past, detailed examinations have not been made as to whether or not these vacant lattice points gather together to form a vacancy and as to conditions under which the vacancy is formed. The elucidation to these problems is published for the first time in the present specification. When titanium particles and aluminum particles are heat-treated in mechanical contact with each other, interdiffusion takes place through the initial interface therebetween. In this case, there is an overwhelming great difference between the diffusion rates of these two atoms and the diffusion rate of the aluminum atom is far greater than that of the titanium atom. As a result, a number of vacancies are formed on the aluminum side (Clearly speaking, the individual vacancies should be possibly called a Kirkendall vacancy). The above mentioned diffusion process is schematically represented by a shift from Fig. 2 (a) to Fig. 2 (b). The reasons for various limitations defined in the present invention will be illustrated hereinafter. Now, turning to Fig. 2 (a), this figure shows a typical condition of the initial interface between the titanium particles and the aluminum particles which are mechanically contacted with each other. That is, the titanium particles 11 having a large particle size are surrounded by the aluminum particles 12 having a small particle size. Macroscopically, the difference of the particle sizes of the titanium particle and the aluminum particle contributes to the formation of voids (not Kirkendall vacancy) of the intended porous body. The aluminum particles 12 diffuse into the titanium particles 11 through the contact interface therebetween, thereby to form a reaction layer 13 of Ti—Al as shown in Fig. 2 (b), while the individual aluminum particles are fused with each other and the pure aluminum layer 15 is gradually reduced, so that a group of Kirkendal vacancies 14 is formed. With the lapse of time, the condition of the Ti—Al system shifts from Fig. 2 (b) to Fig. 2 (C) and finally, the pure aluminum layer disappears into the Ti—Al reaction layer 16, while the grown Kirkendal vacancies are left behind in thr form of a cave 17 opened outwardly. The condition of the Ti—Al system as shown in Fig. 2 (c) satisfies all of the configurations of the present invention. Owing to the outstanding effects due to the difference of the particle sizes of the titanium particle and the aluminum particle, the void 4 formed in the resultant porous body is desirably larger and more widely opened outward than that of the conventional porous body and fine ruggedneeses resulting from the deformation of the Kirkendall vacancies are formed in a high density on the surface of the porous body. Such structure can not be attained in the conventional porous body. because the fine ruggednesses cover the surface of the large, widely and outwardly opened void, it is possible to stably realize an enlargement ratio of surface of from about 3 to 5. The enlargement ratio of suface is calculated by dividing surface area of porous body including surface area of fine ruggedness formed on surface by surface area of porous body measured as the sum of surface area of void supposing that no fine ruggedness is present on surface.

The size of the fine ruggedness is in a range of from 0.5 to 5 µm. If the size of the fine ruggedness is less then 0.5 µm, the fine ruggedness is rendered flat by an oxide film layer formed on the surface thereof by anodic oxidation, which hinders an increase in capacitance. On the other hand, if the size of the fine ruggedness is greater than 5 µm, an anode body exhibiting a high capacitance comparable with that of the Ta porous body can not be obtained.

More concrete examples of the present invention will be described hereunder.

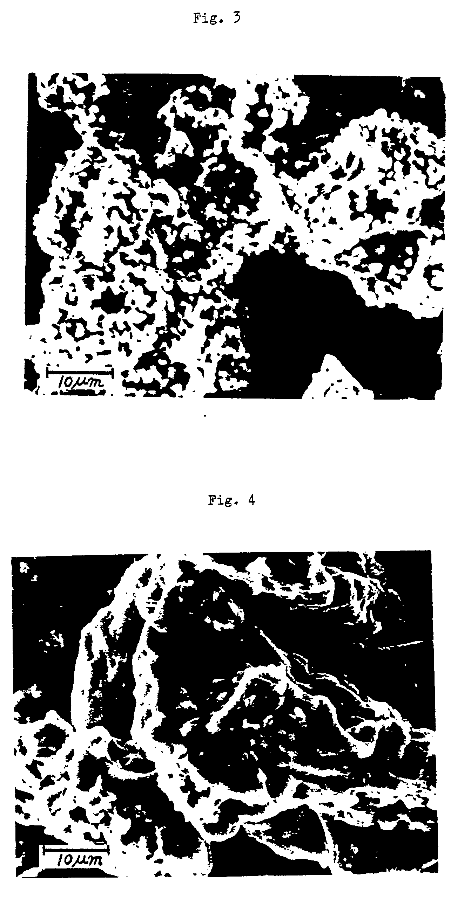

Titanium powder having an average particle size of 30 µm and aluminum powder having an average particle size of 15 µm in an atomic percent (%) ratio of 50:50 were thoroughly mixed. The mixture was molded under compression to form a shaped product. The shaped product was heated in a vacuum furnace having a degree of vacuum of $133 \times 10^{-6}$ Pa ($10^{-6}$ mm Hg) at a temperature of 600°C for 10 minutes and, subsequently, at a temperature of 1000°C for 2 hours. Fig. 3 shows an example of a secondary electron view under a scanning type electron microscope of the internal structure of the so prepared porous body at a magnification of 1800. In Fig. 3, the portion looked dark indicates the large, outwardly opened void. It is apparent from Fig. 3 that fine ruggednesses in the form of a sphere having a size of several microns, which learly appear to be originated from the Kirkendall vacancies, are formed in a high density on the surface of rough ruggednesses having a diameter of several ten microns. Then, the porous body was anodically oxidized in an aqueous solution of 1% of ammonium borate at a voltage of 40V. The resultant porous body exhibited a capacitance of about 32000 µF.V/cm². Because the capacitance per unit area of the porous body is considered 8 µF.V/cm², it is apparent that the porous body has a specific surface area as high as 4000 cm²/cm³. This value is remarkably high even as compared with the original specific surface area (about $10^3$ cm²/cm³) of the raw powders. Therefore, such high specific surface area is clearly ascribable to the double rugged structure of the porous body according to the present invention.

The same examination was made when the composition of a mixture of aluminum powder and titanium powder is variously changed. When the aluminum is less than 25 atomic % the resultant porous body has littel ruggedness of the surface thereof as is evidenced in Fig. 4 indicating a secondary electron view under a scanning electron microscope of the porous body at a magnification of 1800. On the other hand, if the aluminum is more than 80 atomic %, the resultant porous body is abnormally bulged and simultaneously, exhibits a decreased specific surface area.

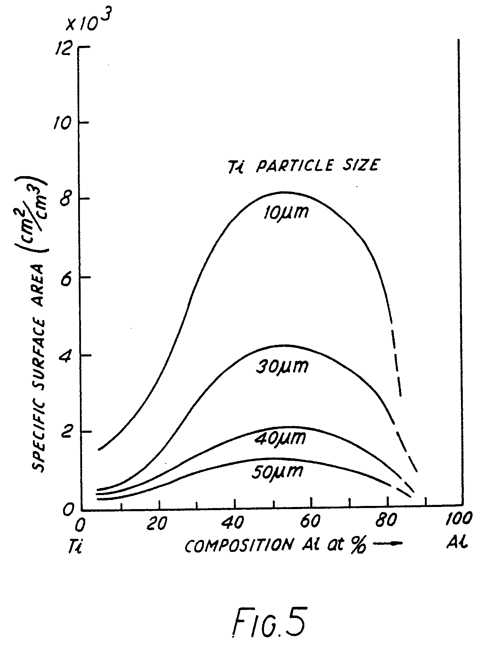

Then, titanium powder having an average particle size of 10 µm, 30 µm, 40 µm or 50µm was respectively mixed with aluminum powder having an average particle size of 5 µm. The mixture was molded under compression to form a shaped product. The shaped product was heat-treated at a temperature of 550°C for 1 hour and, then, it was re-heat treated at a temperature of 1050°C for 1 hour. The relationship between the specific surface area and the composition of the starting powdery mixture with respect to a parameter of the average particle size of titanium is shown in Fig. 5. Fig. 5 clearly indicates that a remarkably high specific surface area can be obtained when the starting powder mixture contains from 40 to 70 atomic % of aluminum. However, the specific surface area is decreased as the average particle size of the titanium is increased. The use of the titanium having an average particle size of from 40 to 50 μm results in a too small specific surface area.

Generally, it is known that the structure of a porous body becomes fine as the size of the starting powders used become fine. However, in order to obtain a porous body having a desired double rugged surface, the ratio of the particle size of the aluminum to the particle size of the titanium should be limited to a special value. The inventors of the present invention found that when the average particle size of the aluminum powder was less than 1/2 of that of the titanium powder, the resultant shaped product comprised the titanium particles uniformaly surrounded with the aluminum particles, and this shaped product could give a porous body having a double rugged structure after being subjected to the two-step heat treatment. Contrary to this, if the average particle size of the aluminum powder was greater than 1/2 of that of the titanium powder, both the double rugged structure and the surface composition of the resultant porous body were liable to become non-uniform.

It is considered that the above mentioned asymmetric property with regard to the particle size ratio is due to the asymmetric diffusion phenomenon wherein the aluminum predominantly diffuses into the titanium and little of the titanium diffuses into the aluminum.

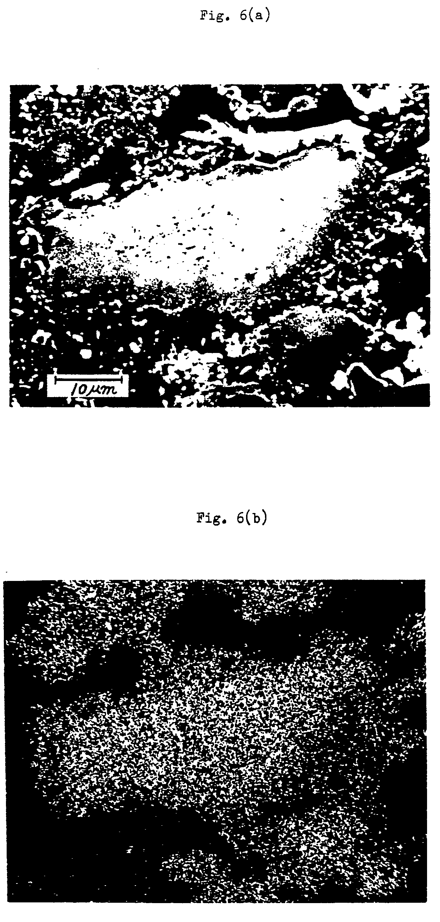

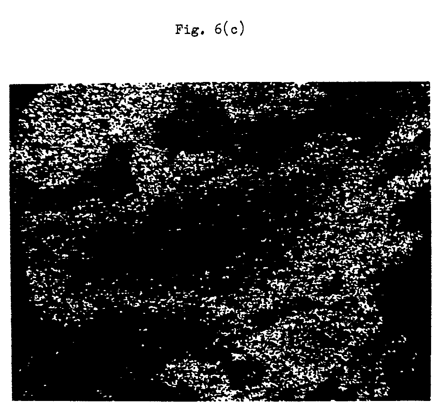

Then, a resin was embedded in a porous body having a double rugged structure shown in Fig. 3. The resin embedded porous body was cut and the cut area was observed. The observation result is shown in Figs. 6 (a), (b) and 6 (c). Fig. 6 (a) shows a secondary electron view under a scanning electron microscope of the cut area at a magnification of 1800. Figs. 6 (b) and 6 (c) show a Ti characteristic X-ray intensity view and an Al characteristic X-ray intensity view of the cut area, respectively, which were photographed by an X-ray analysis device attached to the scanning electronmicroscope. These three photographs were taken on the same location of the same sample from different viewpoints. These photographs clearly indicate that the fine ruggedness present on the surface of the porous body is in the form of a sphere having a size of several microns and contains a larger amount of the aluminum with respect to the titanium, and the primary particle constituting the skeleton of the porous body (i.e. a large particle surrounded with the above mentioned finely divided particles) is depletive in aluminum and rich in titanium at the center portion thereof. Also, these photographs clearly indicate that voids are present between the primary particles. The size of the void is increased in proportion to the size of the primary particle. As is schematically shown in Fig. 1 (b), the porous body according to the present invention has a remarkably broad void channel for its specific surface area and thus, there is little possibility that the channel is clogged with manganese dioxide during the formation of a cathode. Further detailed quantitative X-ray analysis of the composition of the porous body revealed that the secondary particles forming the fine ruggedness on the surface thereof approximately consisted of Ti Al and/or $TiAl_3$ irrespective of the composition of the starting powdery mixture.

Another X-ray pattern obtained on the porous body demonstrated this composition. As already described above, the diffusion between the titanium and the aluminum proceeds according to the one-sided diffusion of the aluminum into the titanium. In this diffusion process, a $TiAl_3$ phase is first formed. After the formation of the $TiAl_3$ is complete, a phase with a higher content of titanium than the $TiAl_3$ phase is formed by the diffusion of the aluminum. However, the formation of the higher titanium content phase proceeds much more slowly than the formation of the $TiAl_3$ phase. To ensure that the resultant porous body has a uniform composition corresponding to the composition of the starting powdery mixture, the mixture after being molded should be heated at a temperature of about 1300°C or more for a significant period of time. Of course, the heat treatment at such high temperature range promotes the interdiffusion between these two kinds of elements tendering the formed double rugged structure flat. Accordingly, the object of producing a porous body having a high specific surface area which is intended by the present invention can not be performed. The heat treatment at a temperature of about 1100°C or less is suitable for maintaining the double rugged structure of the present invention. As is clearly seen in Fig. 3 and Figs. 6 (a), 6 (b) and 6 (c), the porous body prepared by the process of the present invention generally has the following characteristics.

(1) It is of a double rugged structure having fine ruggednesses on the surface of the body.

(2) The primary particle is formed around a nucleus of titanium, and the surface portion of the particle is rich in aluminum while the central portion of the particle is rich in titanium.

(3) The composition of the fine particle structure in the vicinity of the surface on which a dielectric layer is to be formed by anodic oxidation corresponds to a compositional range of from TiAl to $TiAl_3$, irrespective of the composition of the starting powdery mixture.

(4) There is present a remarkably broad void channel having a size in proportion to the diameter of the primary particle formed around a nuceus of titanium.

As the aluminum content in the starting powdery mixture is gradually increased toward 80 atomic %, the aluminum atom deeply diffuses into the center of the primary particle and the amount of the aluminum diffused is also increased. However, it is to be understood that when the Al—Ti porous body is formed into an anode body for a capacitor after being anodically oxidized, the electrical properties of the anode body as a capacitor are not directly influenced by the composition of the central portion of the primary particle. The thickness of the oxide layer formed on the surface of the porous body by anodically oxidizing it is proportional to the anodic oxidation voltage applied (the formation voltage). Usually, the oxide layer grows at a rate of about 20 Å per volt. Accordingly, when the formation voltage is 100 V, an oxide layer having a thickness of several thousand angstroms is formed on the surface of the porous body.

That is, with regard to the porous body produced according to the process of the present invention, the composition of the spherical particle on the surface of the primary particle which forms the fine ruggedness as shown in Fig. 3 directly participates in the electrical properties of the resultant capacitor. As described hereinabove, the composition of the spherical particle is approximately in a range of from TiAl to $TiAl_3$, irrespective of the composition of the starting powdery mixture. The fact that the composition of the surface of the porous body is maintained constant as described above can warrent the stabilty of the electrical properties of the resultant capacitor.

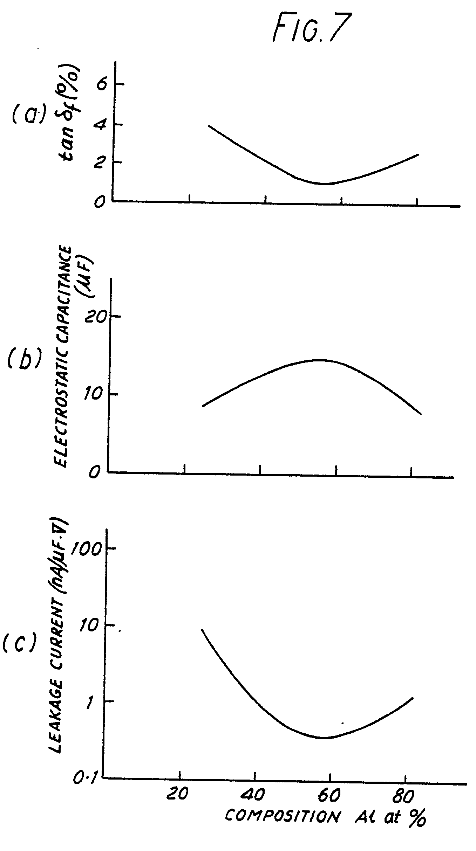

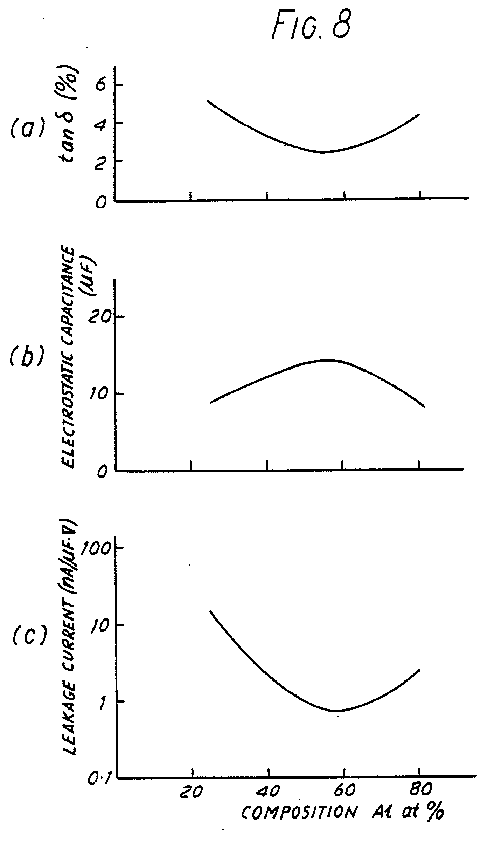

The electrical properties of the porous body prepared according to the process of the present invention was very excellent. More specifically, a combination of titanium powder having an average particle size of 10 μm and aluminum powder having an average particle size of 5μm was used to prepare a porous body the composition of which starting powdery mixture contained from 25 to 80 atomic % of aluminum. The mixture was molded under compression to form a shaped product having a weight of 0.02 g and a porosity of about 30%. The shaped product was heat-treated at a temperature of 500°C for 10 minutes to promote the Kirkendall effect of the Ti—Al system. Thereafter, the shaped product was reheated at a temperature of 1050°C for 1 hour. The so obtained porous body was anodically oxidized in an aqueous solution of 1% of ammonium carbonate at a voltage of 40 V for 2 hours. Then, leakage current was measured by immersing the anodically oxidized porous body in the same aqueous solution after application of a voltage of 8 V. Capacitance and dielectric loss were measured by immersing the anodically oxidized porous body in an aqueous solution of 30% of sulfuric acid. The results are shown in Figs. 7 (a), 7 (b) and 7(c), The resultant porous body exhibited a capacitance per unit volume of from $3 \times 10^4$ to $6.4 \times 10^4 \mu FV/cm^3$ which was substantially equal to the highest value of the Ta porous body. The leakage current and dielectric loss of the porous body were in ranges of from 10 to 0.4 nA/μFV and from 1.5 to 4%, respectively. The anode body which was obtained from the starting powder mixture having 50 to 70 atomic % of aluminum was most excellent in respect of all of these properties. Considering that the dielectric layer formed on the surface of the porous body by the anodic oxidation consists of the anodes of the surface layer having a compositional range of from TiAl to $TiAl_3$, irrespective of the composition of the starting powdery mixture, it seems strange that the leakage current and the dielectric loss of the capacitor properties depend on the composition of the starting powdery mixture. Essentially, if the mixing of the powder mixture is ideally carried out and the surface of the porous body after being heat-treated is completely uniform, this phenomenon may not occur. However, in the case of a powdery mixture containing a high content of titanium, for example, the number of the titanium particles is relatively increased, so that a portion having a composition close to pure titanium may be produced in the surface of the resultant porous body. Considering that the surface portion having a composition close to pure titanium is difficult to anodically oxidize and thus, the resultant anodically oxidized layer is inferior as an insulting film, the phenomenon that the leakage current is somewhat increased when the titanium content in the starting powder mixture is increased can be understood. The electrical properties of the anodically oxidized porous body after being solidified are shown in Figs. 8(a), 8(b) and 8(c). The solidification was carried out by immpregnating the anodically oxidized porous body with manganese nitrate hexahydrate and heating the impregnated porous body at a temperature of 230°C to decompose the manganese nitrate, thereby forming a manganese dioxide layer on the dielectric oxide film. This procedure was repeated 2 to 4 times. Therafter, graphite and a silver paste were continuously applied to the manganese dioxide layer.

Comparing the capacitance after the solidification as shown in Fig. 8 (b) with the wet capacitance as shown in Fig. 7 (b), it is apparent that at a stage when the thermal decomposition baking of manganese nitrate hexahydrate was repeated 2 to 4 times, the coverage of manganese dioxide on the surface of the porous body reaches almost 100%.

Also, as is seen in Figs. 8 (a) and 8 (c), the dielectric loss and leakage current of the porous body after the solidification are in ranges of from 2.5 to 5% and from 0.7 to 15 nA/μF.V, respectively. Particularly, in the case of the starting powdery mixture containing 50 to 70 atomic % of aluminum, the resultant solidified porous body exhibited excellent dielectric loss and leakage current of from 2.5 to 3% and from 0.7 to 1 nA/ μF.V, respectively.

For comparison purpose, a porous body having the conventional structure (not double rugged structure) and the same capacitance per unit volume and size was produced from a mixture of titanium powder having an average particle size of 4 μm and aluminum powder having an average particle size of 5 μm. The resultant porous body was provided with a manganese oxide layer by thermal decomposition of manganese nitrate hexahydrate. At a stage when the thermal decomposition baking of manganese nitrate hexahydrate was repeated 2 times, the coverage of manganese dioxide on the surface of the porous body was 50% or less. Also, the solidified body exhibited a very dielectric loss of 10% or more. In addition, it was found that even if the thermal decomposition procedure was further repeated, the coverage of manganese dioxide was not increased and the leakage current was one-sidedly increased.

Similarly, in the case of the Ta porous anode body, when manganese nitrate hexahydrate is directly applied to the porous body, the void channel contained in the body is partially clogged at the initial decomposition stage. As a result of this, the subsequent impregnation of the manganese nitrate is not performed to a satisfactory extent, which also results in a poor coverage of manganise dioxide. In order to avoid this disadvantage, it is a common practice that manganese nitrate hexahydrate in the form of a dilute solution thereof in an alcohol is applied many times to the porous body, so as to attain a satisfactory coverage and impedance. According to this process, the thermal decomposition procedure should be repeated 5 to 10 times.

For experiments sake, this process was applied to the porous body having a double rugged structure which has been detaily discussed hereinabove and the porous body having the conventional structure (the same C vf/vol and size) which has been used for comparison purpose. In the thermal decomposition procedure, 50% methanol solution of manganese nitrate hexahydrate was used. The thermal decomposition procedure was repeated 5 to 10 times depending on the composition of the starting powdery mixture. Thereafter, graphite and silver paste were continuously applied to the resultant manganese dioxide layer. In all the so obtained solidified porous bodies, the coverage of manganese dioxide reached almost 100%, but the leakage current value was a high level $10^2$ to $10^3$ times as large as that shown in Fig. 8.

This result indicates a poor resistance of the Al—Ti porous anode body to the cathode-forming procedure. Also, this result clearly indicates that the porous structure according to the present invention exhibits a more excellent manganese dioxide-baking property than the conventional porous structure, which feature makes up for the above mentioned poor resistance.

As has been detaily described hereinabove, the present invention is epochmaking in that it provides a porous body for a solid electrolytic capacitor which is capable of substituting for a tantalum porous body and exhibit a high capacitance and is inexpensive, and a process for producing the same.

## Claims

1. A porous body for a solid electrolytic capacitor comprising a number of Ti—Al alloy particles partially contacted with each other so as to form an integral body, the surface of the respective Ti—Al alloy particles having a fine ruggedness, and the Al content of the Ti—Al alloy being in the range of 50 to 70 atomic %, characterised in that the porous body has large-sized voids enabling satisfactory cathode formation and the size of said fine ruggedness ranges from 0.5 to 5 μm.

2. A process for producing a porous body for a solid electrolytic capacitor comprising the steps of:
mixing titanium powder having an average particles size of 10 to 30 μm with aluminum powder having an average particles size in the range of 1/6 to 1/2 of that of said titanium powder;
molding the mixture under compression to form a shaped product; and
heat treating the shaped product in vacuo or in an inert gas, thereby to diffuse the aluminum into the titanium.

3. A process as claimed in claim 2, wherein the heat treatment is carried out at a temperature within the range from 500°C up to a temperature of less than the effective melting point of aluminum for a period of from 5 to 60 minutes.

4. A process as claimed in claim 3, wherein a second heat treatment is carried out at a temperature of 700 to 1100°C for a period of 5 to 180 minutes. .

## Patentansprüche

1. Poröser Körper für Fest-Elektrolytkondensatoren mit einer Anzahl von Ti—Al-Legierungspartikeln, die teilweise miteinander in Kontakt stehen und so einen einstückigen Körper ausbilden, wobei die Oberfläche der entsprechenden Ti—Al-Legierungspartikel feine Unebenheiten aufweisen und der Al-Anteil in der Ti—Al-Legierung im Bereich zwischen 50—70 Atom-% liegt, dadurch gekennzeichnet, daß der poröse Körper zur Ermöglichung zufriedenstellender Kathodenausbildung groß bemessene Hohlräume aufweist und die größe der feinen Unebenheiten im Bereich zwischen 0,5—5 μm liegt.

2. Verfahren zur Herstellung eines porösen Körpers für Fest-Lecktrolytkondensatoren mit den Schritten:
Vermischung von Titanpulver mit einer mittleren Partikelgröße von 10—30 μm mit Aluminiumpulver mit einer mittleren Partikelgröße im Bereich von 1/6—1/2 der des Titanpulvers,
Formen der Mischung unter Druck zur Ausbildung eines geformten Produktes, und
Wärmebehandlung des geformten Produktes in Vakuom oder einem Edelgas, wodurch das Auluminium in das Titan diffundiert.

3. Verfahren nach Anspruch 2, dadurch gekennzeichnet, daß die Wärmebehandlung bei einer Temperatur innerhalb des Bereiches von 5000°C

bis zu einer Temperatur unterhalb des effektiven Schmelzpunktes von Alunimium für eine Dauer von 5—60 Min. durchgeführt wird.

4. Verfahrn nach Anspruch 3, dadurch gekennzeichnet, daß eine zweite Wärmebehandlung bei einer Temperatur von 700—1100°C für eine Dauer von 5—180 Min. durchgeführt wird.

**Revendications**

1. Corps poreux pour condensateur à électrolyte solide comprenant un certain nombre de particules d'alliage Ti—Al en contact partiel les unes avec les autres de façon à former un corps en une pièce, la surface des particules respectives d'alliage Ti—Al ayant une fine rugosité, et la teneur en Al de l'alliage Ti—Al étant comprise entre 50 à 70 atomes en %, caractérisé en ce que le corps poreux a des vides de grande dimension qui permettent la formation satisfaisante d'une cathode et la taille de la fine rugosité est comprise entre 0,5 et 5 μm.

2. Procédé de fabrication d'un corps poreux pour condensateur à électrolyte solide, comprenant les étapes consistant à:

—mélanger de la poudre de titane ayant une taille moyenne des particules de 10 à 30 μm avec de la poudre d'aluminium ayant une taille moyenne des particules comprise entre 1/6 et 1/2 de celle de la poudre de titane;

—mouler le mélange sous compression pour former un produit façonné; et

—traiter thermiquement le produit façonné sous vide ou dans un gaz inerte, ce qui permet de diffuser l'aluminium dans le titane.

3. Procédé selon la revendication 2, dans lequel le traitement thermique est effectué à une température comprise dans la gamme allant de 500°C à une température inférieure au point effectif de fusion de l'aluminium pendant une durée comprise entre 5 et 60 minutes.

4. Procédé selon la revendicaton 3, dans lequel un second traitement thermique est effectué à une température de 700 à 1100°C pendant une durée de 5 à 180 minutes.

FIG.1

(a)

(b)

FIG.2

(a)

(b)

(c)

1

Fig. 3

Fig. 4

FIG.5

Fig. 6(a)

Fig. 6(b)

Fig. 6(c)

# FIG.7

## FIG. 8

(a)

(b)

(c)